# EUROPEAN PATENT SPECIFICATION

(11) **EP 3 134 281 B1**
(45) Date of publication and mention of the grant of the patent: **17.03.2021**
(21) Application number: 13801721.5
(22) Date of filing: 05.09.2013
(51) Int. Cl.: B60D 1/24

(54) **A SUSPENSION SYSTEM FOR A HITCH**
AUFHÄNGUNGSSYSTEM FÜR EINE FAHRZEUGKUPPLUNG
SYSTÈME DE SUSPENSION POUR UN ATTELAGE

(30) Priority: 05.09.2012 GB 201215881
(43) Date of publication of application: 01.03.2017
(73) Proprietor: Dromone Engineering Limited, Oldcastle, County Meath (IE)
(72) Inventor: McCormick, Patrick, Dromone Oldcastle County Meath (IE); Egenton, William, Oldcastle County Meath (IE)
(86) International application number: PCT/IB2013/058310
(87) International publication number: WO 2014/037895

(56) References cited:
- EP-A2- 1 905 290
- WO-A1-01/07274
- GB-A- 1 567 038
- GB-A- 2 076 766

## Description

The present invention relates to a suspension system comprising a towing hitch.

In any towing arrangement, there exists the potential that forces from the towed apparatus are transferred into the towing vehicle. These forces can not only make the towing vehicle more uncomfortable to drive, but can actually be dangerous as sudden transfer of forces can cause a driver to lose control. In addition, the forces transferred from the towed apparatus are unpredictable and often sudden, making it impossible for the driver of the towing vehicle to rely on caution alone or assume that they can compensate for these transfers of forces as they arise. Moreover, the transfer of these forces can reduce the operational capability of the towing vehicle, causing the operator to operate at lower speeds in order to better manage the unpredictable forces that can affect the level of control he/she has over the towing vehicle. The forces transferred are partly dependant on the weight of the towed apparatus and as a result, the heavier the load, the greater the forces that will be transferred to the towing vehicle.

Additionally, the constant transfer of shock forces from the towed apparatus to the towing vehicle can cause fatigue of the mechanical components over time, resulting in possible ultimate failure of these components. Again, this problem intensifies as the weight of the towed apparatus and towing vehicle is increased and critical components experience significant loading during operation. The shock loading and associated fatigue not only affects the mechanical components, but can be transferred to many of the components of the towing vehicle and such loading can even manifest itself in additional tire wear or higher fuel consumption as the towing vehicle works to fight the forces transferred from the towed apparatus. Furthermore, it is a legal requirement that drivers of vehicles are not subjected to ongoing whole body vibrations for health considerations so there is a desire to reduce the vibrational forces transferred through the towing linkages to reduce this vibrational effect Document WO 01/07274 discloses a tow coupling for a prime mover and a trailer combination comprising first and second damper units reacting between the prime mover and the trailer, and means for interconnecting the coupling and the braking mechanism of the prime mover such that, until the braking mechanism of the prime mover is actuated, the first and second damper units provide a combined, relatively heavy duty damping effect between the prime mover and the trailer, and, on actuation of the braking mechanism of the prime mover, the damping effect of the second damper unit is disconnected whereby damping between the prime mover and the trailer is effected by the first damper unit only and which is chosen to satisfy civilian on-road regulations.

It is an object of the present invention to obviate or mitigate the problem of forces transferred from a towed apparatus affecting the comfort, health and safety of an operator of the attached towing vehicle, and the effect of such transferred forces on the longevity of the component parts of both the towed apparatus and the towing vehicle.

Accordingly, the present invention provides a suspension system comprising a towing hitch for a vehicle for reducing the impact of forces transferred from a towed apparatus to a towing vehicle during operation, the suspension system being movably mountable on the towing vehicle, the suspension system further comprising at least one damping means connectable at a first end to the towing vehicle and connected at a second end to the towing hitch so as to dampen relative movement between a hitch end of the towing hitch and the towing vehicle, wherein the damping means comprises a fluid circuit wherein the suspension system comprises a control system in operable engagement with the fluid circuit of the damping means for adjustable control of the damping means and wherein the control system comprises a means for detecting a trigger value for activating the adjustable control of the damping means.

Ideally, the towing hitch is movably mountable directly or indirectly on the towing vehicle.

Preferably, the towing hitch comprises any one of a tow ball, tow pin or piton and jaw, towing bar and ball and spoon arrangement. By towing hitch we mean any means for engaging a corresponding part of an apparatus to be towed.

Ideally, the fluid circuit is a hydraulic circuit.

Advantageously, the control system automatically detects the presence of forces acting on the damping means in an upward or downward direction and manipulates fluid within the suspension system to dampen the forces experienced by the towing vehicle in the required direction. The manipulation of the fluid is dependent on the level and direction of the load experienced. Furthermore, the incorporation of the suspension system between the towing vehicle and the towed apparatus allows the vehicle to travel at greater speeds and therefore improves the productivity of the towing vehicle.

An unexpected advantage of the present invention which has been discovered during testing is that the overall braking performance of the combined towing vehicle and towed apparatus is improved when the suspension system is engaged.

Ideally, the suspension system is movably mountable on the towing vehicle for allowing generally vertical and/or horizontal movement of the hitch.

Preferably, the suspension system is pivotally mountable on the towing vehicle.

Ideally, the towing hitch is movably mountable on the remaining parts of the suspension system.

Preferably, the towing hitch is mounted on the damping means.

Ideally, the towing hitch is mounted on at least one actuating arm of the damping means.

Preferably, the towing hitch has an associated locking means.

Ideally, the locking means has a biasing means for biasing the locking means into a locking position under normal conditions. Advantageously, the biasing means ensures that the locking means is maintained in a position relative to the towing hitch for securely retaining a connector portion of the towed vehicle on the towing hitch during use.

Ideally, the control system has a load compensation means for the compensation of minor loads and a load compensation means, preferably separate, for the compensation of major loads.

Ideally, the detecting means comprises a sensor.

Ideally, the control system comprises an electronic control unit in operable engagement with the sensor and a means for supplying fluid to the circuit.

Ideally, the means for supplying fluid is a pump in fluid communication with a reservoir of the circuit. Preferably, a control valve block is operably engaged with the fluid circuit.

Preferably, the load compensation means for the compensation of minor loads comprises the piston and cylinder arrangement and/or an accumulator operably coupled to the fluid circuit.

Ideally, the electronic control unit is in operable engagement with a system status display means.

Preferably, the system status display means is a visual display unit locatable within easy viewing distance of a driver of the towing vehicle.

Ideally, the damping means are designed to absorb generally vertical and/or horizontal forces.

Preferably, the damping means comprises one or more hydaulic damping cylinders.

Ideally, each hydraulic damping cylinder comprises a cylinder and a piston, wherein the piston is movably attachable at a first end to the towing vehicle or intermediate component thereof.

Alternatively, the piston is movably attachable to the towing hitch hitch or intermediate component thereof.

In the former case, the cylinder is movably attachable to the towing hitch or intermediate component thereof.

Ideally, the damping means comprises a shock absorption means comprising a mechanical shock absorber.

The invention will now be described with reference to the accompanying drawings which show by way of example only one embodiment of a suspension system for a towing hitch of a vehicle in accordance with the invention.
Figure 1 is a schematic view of a hydraulic circuit and control system;
Figure 2 is a side view of the suspension system for a towing hitch attached to the towing vehicle and the towing hitch;
Figure 3 is a disassembled view showing the damping members and the attachment frames;
Figure 4 is a perspective view of one damping member in operable engagement with the towing hitch and the towing vehicle;
Figure 5 is a side view of a second embodiment of suspension system for a towing hitch;
Figure 6 is a third embodiment of suspension system in accordance with the invention;
Figure 7 is a perspective view of a fourth embodiment of the suspension system wherein the towing hitch has a corresponding locking means for a towing ring;
Figure 8 is a perspective view of a fourth embodiment of the suspension system wherein the towing hitch has a corresponding locking means for a towing ball fitting;
Figure 9 is a perspective view of a fourth embodiment of the suspension system wherein the towing hitch is a towing bar;
Figure 10 is a perspective view of a fifth embodiment of the suspension system wherein the towing hitch is slidably movable with respect to the locking means and showing the towing hitch and the drop base in a retracted position;
Figure 11 is a perspective view of a fifth embodiment of the suspension system wherein the towing hitch is slidably movable with respect to the locking means and showing the towing hitch in a retracted position and drop base in a lowered position; and
Figure 12 is a perspective view of a fifth embodiment of the suspension system wherein the towing hitch is slidably movable with respect to the locking means and showing the towing hitch in an extended position and the drop base in a lowered position.

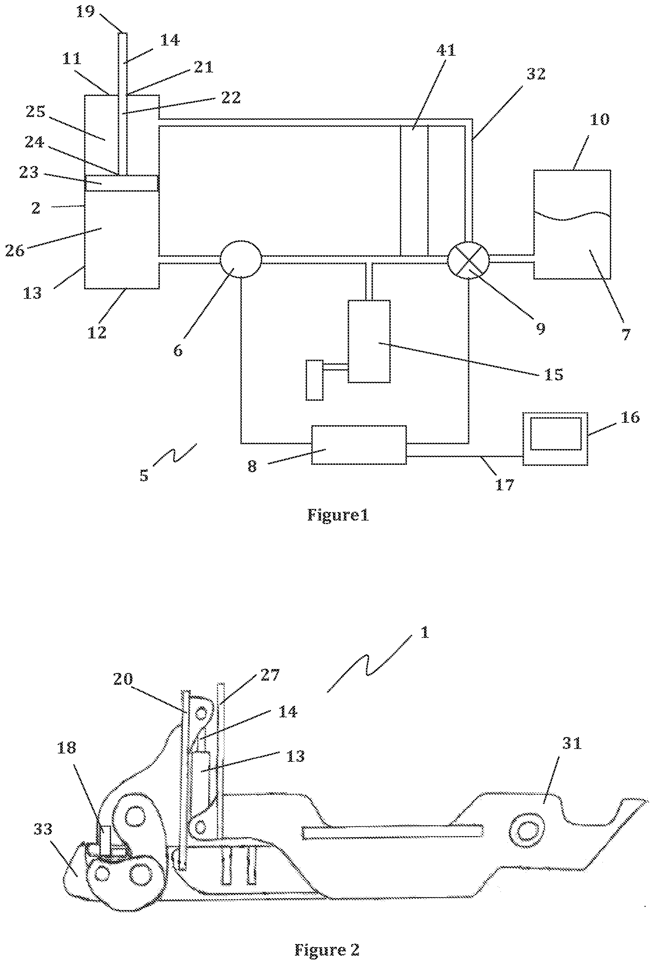

In the drawings, there is shown a suspension system for a towing hitch indicated generally by the reference numeral 1 for reducing the impact of forces transferred from a towed apparatus to a towing vehicle during operation. The suspension system 1 has two damping members 2 connectable at a first end 3 to the towing hitch 33, and connected at a second end 4 to the towing apparatus 31. The suspension system 1 has a control system 5 (see Figure 1) in operable engagement with a circuit 32 of the system 1 for adjustably controlling the damping members 2. The control system 5 has a sensor 6 for detecting a trigger value for activating adjustable control of the damping member 2.

The sensor 6 automatically detects the presence of forces acting on the hitch 33 in an upward or downward direction and signals the control system 5 to manipulate the fluid 7 within the suspension system 1 to dampen the forces experienced by the towing vehicle 31 in the required direction. The manipulation of the fluid 7 is dependent on the level and direction of the load experienced by the hitch 33.

The sensor 6 is in fluid communication with the circuit 32 and the control system 5 comprises an electronic control unit 8 operably engaged with the sensor 6 and a pump 9. The pump 9 is in fluid communication with a reservoir 10 of the circuit 32 to which the damping members 2 are coupled. A control valve block 41 is operably engaged with the fluid circuit 32. The control valve block 41 is designed to handle flow rates in the range of 0 to 200 litres per minute.

The pump 9 is capable of supplying both ends 11, 12 of the cylinder 13 with fluid. The electronic control unit 8 has a software control program with a module for generating control signals for controlling the flow of fluid 7 to each end 11, 12 of the cylinder 13 in response to signals from the sensor 6. Alternatively, the electronic control unit 8 is implemented using hardware. When a large downward load is experienced by the hitch 33 of the suspension system 1, this is detected by the sensor 6 and as a result, the electronic control unit 8 commands the pump 9 to provide additional fluid 7 to the barrel end 12 of the cylinder 13, providing the necessary damping effect. When a large upward load is experienced by the hitch 33 of the suspension system 1, this is detected by the sensor 6 and as a result, the electronic control unit 8 commands the pump 9 to provide additional fluid 7 to the annulus 11 end of the cylinder 13, providing the necessary damping effect. After the load has been detected and the fluid 7 provided to the correct end of the cylinder 13, the sensor 6 continues to monitor the fluid and, if necessary, fluid 7 can be provided to the end of the cylinder 13 opposite the end that received the initial infusion of fluid 7 to further balance the system 5 and provide the ongoing desired damping effect.

When the loads experienced by the hitch 33 of the suspension system 1 are relatively low, load compensation is provided by the piston 14 and cylinder 13 arrangement and/or the accumulator 15 if required, with no assistance or fluid balancing provided by the electronic control unit 8. The sensor 6 still detects measurable fluid parameters but the electronic control unit 8 does not take any action.

The electronic control unit 8 is in operable engagement with a visual display unit 16 via a wired connection 17. The visual display unit 16 is located within easy viewing distance of a driver of the towing vehicle and the output of the sensor 6 is used to form the basis of a status display on the visual display unit 16 so that the driver of the towing vehicle 31 can monitor the operating conditions of the suspension system 1 during use.

The damping member 2 has a damping cylinder 13 and a piston 14 which is pivotally attached at a first end 19 to a back plate 20 of the towing hitch 33 which is movably mounted to the towing vehicle 31.

The annulus end 11 of the cylinder provides an opening 21 for receiving a shaft 22 of the piston 14. The piston has a head 23 which is slidably mounted within the cylinder 13 at a second end 24 of the shaft 22. The head 23 of the piston 14 creates two isolated chambers 25, 26 within the cylinder 13, each with fluid 7 therein.

The barrel end 12 of the cylinder 13 is pivotally attached to a suspension mount frame 27, which is in turn fixed to the towing vehicle 31.

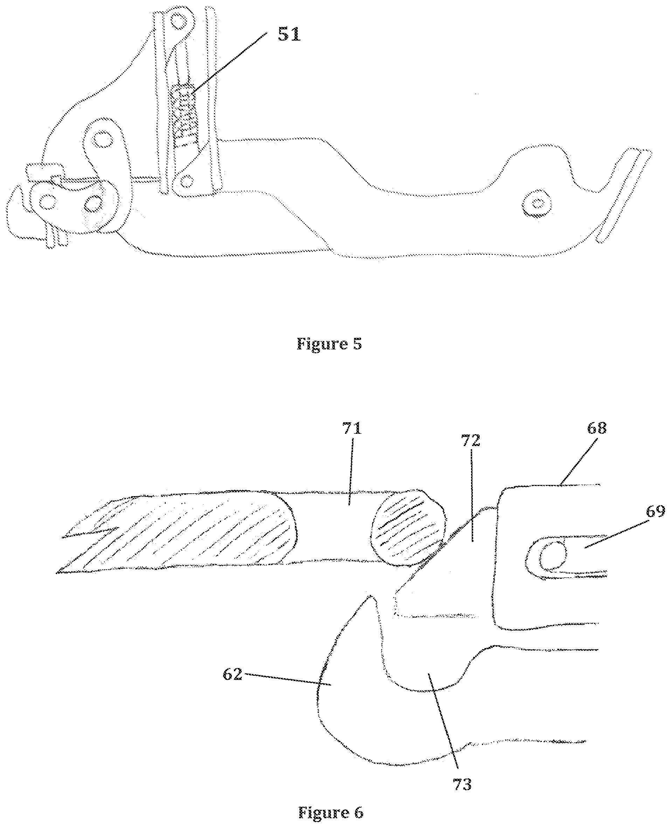

In Figure 5, there is shown as second embodiment of suspension system having the same overall structure of the system 1 shown in Figure 2. The only feature differing from the system 1 shown in Figure 2 is that the cylinder and piston with a fluid circuit has been replaced with a mechanical shock absorber 51 having a spring 51. The spring 51 is designed for absorbing and damping the generally vertical forced being transferred from the towed vehicle through the towing hitch and suspension system to the towing vehicle.

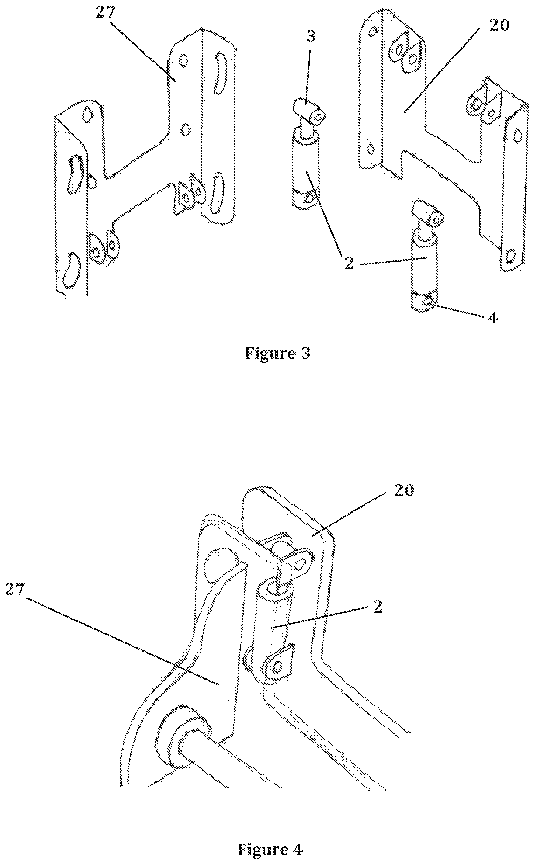

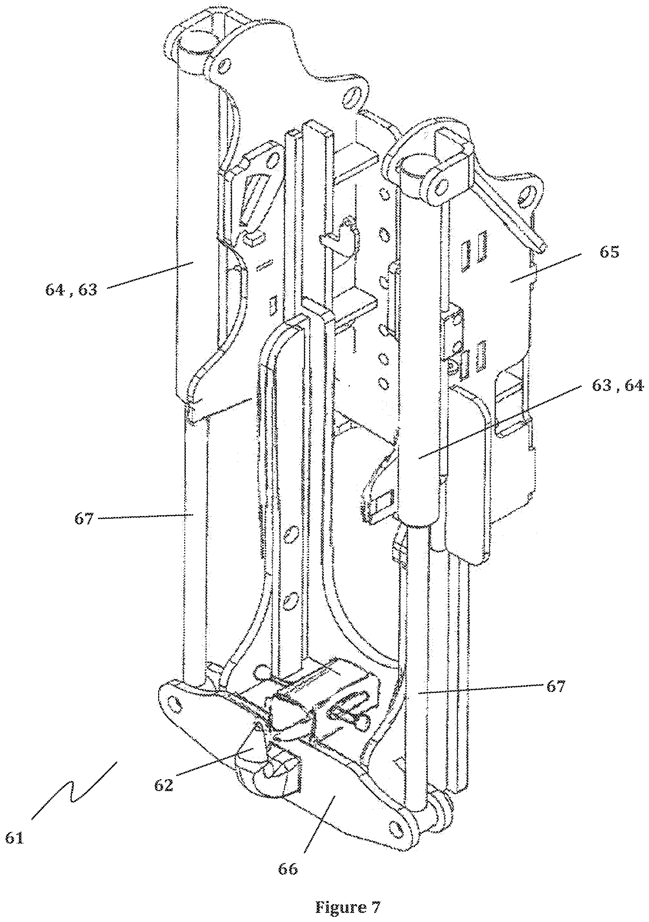

In Figure 7, 8 and 9 there is shown a further embodiment of suspension system indicated generally by the reference numeral 61. In this embodiment, the towing hitch 62 is movably mounted on the suspension system 61. The towing hitch 62 is mounted on the damping member 63. The damping member 63 is provided by a pair of cylinders 64 spaced apart from one another on a mounting frame 65 which is mechanically fixed to the towing vehicle. The towing hitch 62 also has a mounting frame 66 which is connected to a pair of arms 67 protruding from the cylinders 64. It will of course be appreciated that a mechanical damping system such as shown in Figure 5 can be provided between the arms 67 and the cylinders 64 or alternatively a fluid damping system such as the system described with reference to Figures 1 to 4 could equally be utilized. The towing hitch 62 of Figure 7 has an associated locking arrangement 68 shown in detail in Figure 6. The locking arrangement 68 has a biasing member 69 for biasing the locking arrangement 68 into a locking position under normal conditions. Advantageously, the biasing member 69 ensures that the locking arrangement 68 is maintained in a position relative to the towing hitch 62 for securely retaining a connector portion 71 of the towed vehicle on the towing hitch 62 during use.

The locking arrangement 68 has a spring loaded lock keeper member 72 normally protruding above the space 73 of a towing hitch 62 formed for receiving a towing ring 71 or similar coupling of a towed vehicle.

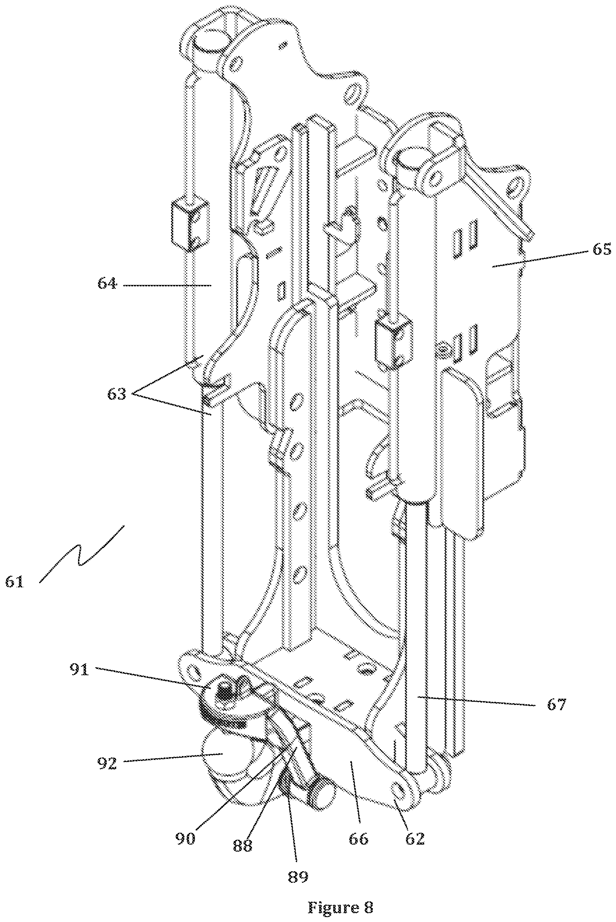

The towing hitch 62 of Figure 8 is a tow ball 92 having an associated locking arrangement 88. The locking arrangement 88 has a biasing member 89 for biasing the locking arrangement 88 into a locking position under normal conditions. Advantageously, the biasing member 89 ensures that the locking arrangement 88 is maintained in a position relative to the towing hitch 62 for securely retaining a connector portion of the towed apparatus on the towing hitch 62 during use.

The locking arrangement 88 has a pair of arms 90 pivotally mounted onto opposing sides of the tow ball 92 with a connecter member 91 joining the arms 90 and normally protruding above the space over the towing ball 92 formed for receiving a towing ring 71 or similar coupling of a towed vehicle.

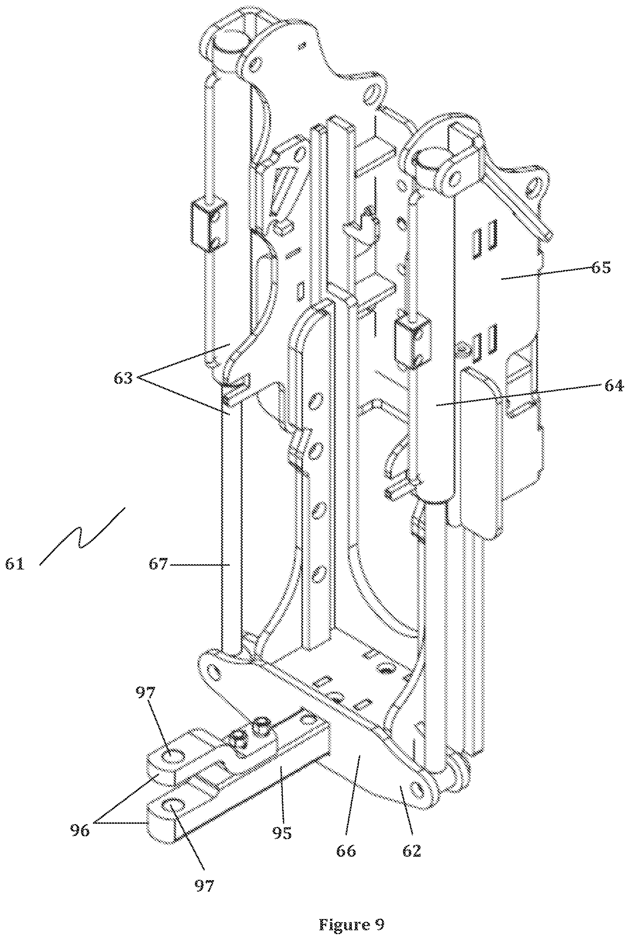

In Figure 9, the towing hitch 62 is a towing bar 95 with a pair of spaced apart jaws 96 each having an aligned 97 aperture formed for receiving a pin.

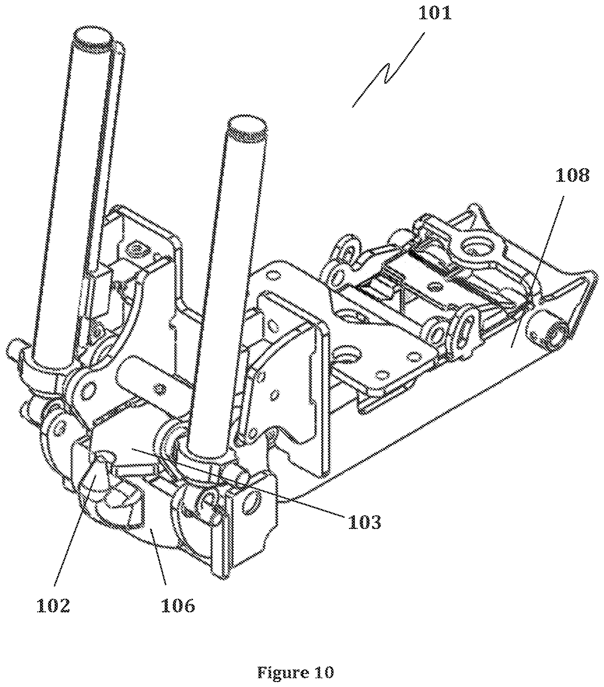

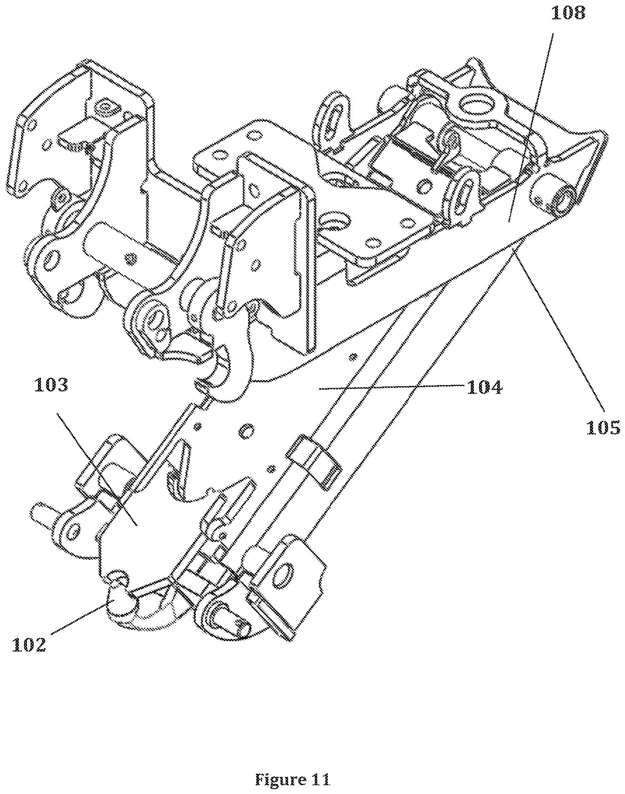

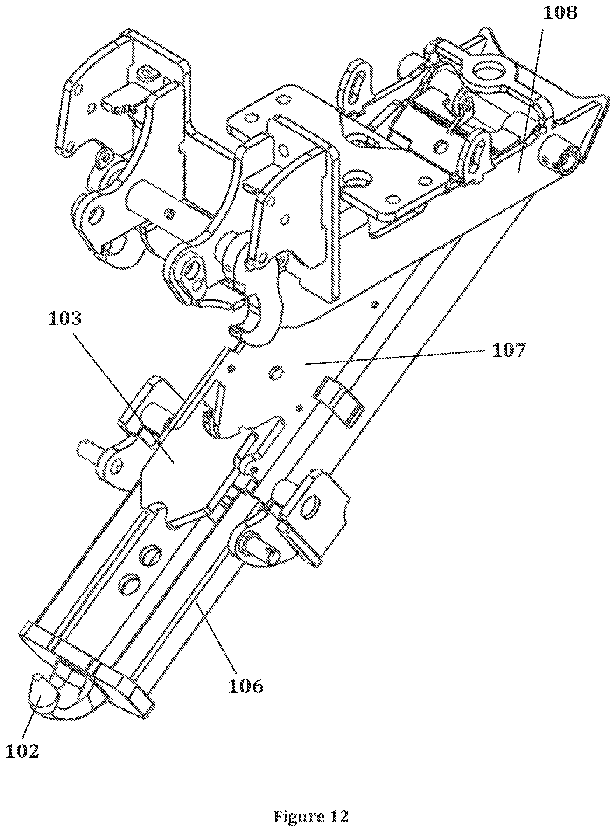

In figures 10, 11, and 12 a fifth embodiment of the suspension system 101 is shown wherein the towing hitch 102 and locking arrangement 103 are located on a drop base 104. The drop base 104 is rotatably coupled to a vehicle attachment frame 108 at an end 105 distal the end having the towing hitch 102 thereon.

The vehicle attachment frame 108 is a generally quadrangular frame which has a cavity in its underside. The drop base 104 is also generally quadrangular in shape and is slightly smaller in size than the vehicle attachment frame 108, such that the drop base 104 is insertable into the cavity of the vehicle attachment frame 108. The drop base 104 is an elongated tubular member having an internal channel.

The towing hitch 102 and locking arrangement 103 are mounted on the drop base 104 with the towing hitch 102 being movable relative to the locking arrangement 103. As the towing hitch 102 and locking arrangement 103 are mountable on the drop base 104 and move vertically together as the drop base 104 is moved, the towing ring or similar coupling means (not shown) of a towed vehicle cannot become wedged beneath the locking arrangement 103 or suspension system 101 as the drop base 104 is moved towards the vehicle attachment portion 108.

The towing hitch 102 is movable relative to the locking arrangement 103 and the drop base 104 as it is slidably mounted via a drop base mounting member 106. The drop base mounting member 106 is generally quadrangular in shape and is slightly smaller than the drop base 104, such that the drop base mounting member 106 is slidably mountable within the channel of the drop base 104. The locking arrangement 103 is located on an upper surface 107 of the drop base 104.

The towing hitch 102 can be moved away from the locking arrangement 103 to allow engagement with a towing ring or similar coupling means of a towed vehicle (not shown), and subsequently moved towards the locking arrangement 103 to secure the towing ring or similar coupling means of a towed vehicle (not shown) for towing. As there is no relative vertical movement between the towing hitch 102 and the locking arrangement 103, there is no risk that the towing ring or similar coupling means of a towed vehicle (not shown) will become wedged between the drop base 104 and the vehicle attachment frame 108.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. A suspension system (1, 61, 101) comprising a towing hitch (33, 62, 102) for a vehicle (31) for reducing the impact of forces transferred from a towed apparatus to a towing vehicle during operation, the suspension system being movably mountable on the towing vehicle, the suspension system further comprising at least one damping means (13, 63, 64) connectable at a first end to the towing
vehicle and connected at a second end to the towing hitch so as to dampen relative movement between a hitch end of the towing hitch and the towing vehicle wherein the damping means comprises a fluid circuit (5),
**characterised in that** the suspension system comprises a control system (8) in operable engagement with the fluid circuit of the damping means for adjustable control of the damping means and wherein the control system comprises a means (6) for detecting a trigger value for activating the adjustable control of the damping means.

2. A suspension system as claimed in claim 1, wherein the control system has a load compensation means for the compensation of minor loads and a load compensation means for the compensation of major loads.

3. A suspension system as claimed in claim 1 or 2, wherein the detecting means compnses a sensor (6).

4. A suspension system as claimed in claim 3, wherein the control system comprises an electronic control unit in operable engagement with the sensor and in operable engagement with a means (9) for supplying fluid to the fluid circuit.

5. A suspension system as claimed in claim 4, wherein the means for supplying fluid is a pump in fluid communication with a reservoir (10) of the circuit.

6. A suspension system as claimed in any one of claims 1 to 5, wherein a control valve block (41) is operably engaged with the fluid circuit.

7. A suspension system as claimed in any one of claims 2 to 6, wherein the load compensation means for the compensation of minor loads comprises a piston (14) and cylinder (13) arrangement and/or an accumulator (15) operably coupled to the fluid circuit.

8. A suspension system as claimed in any one of the preceding claims, wherein the suspension system is movably mountable on the towing vehicle for allowing generally vertical and/or horizontal movement of the hitch end of the towing hitch.

9. A suspension system as claimed in any one of the preceding claims, wherein the suspension system is pivotally mountable on the towing vehicle.

10. A suspension system as claimed in any one of claims 4 to 9 when dependent on claim 4, wherein the electronic control unit (8) is in operable engagement with a system status display means (16).

11. A suspension system as claimed in claim 10, wherein the system status display means is a visual display unit locatable within easy viewing distance of a driver of the towing vehicle.

12. A suspension system as claimed in any one of the proceeding claims, wherein the damping means are designed to absorb generally vertical and/or horizontal forces.

13. A suspension system as claimed in any one of the proceeding claims, wherein the damping means comprises one or more hydraulic damping cylinders.

14. A suspension system as claimed in claim 13, wherein each of the one or more hydraulic damping cylinders comprises a piston which is movably attachable at a first end to the towing vehicle or intermediate component thereof and a cylinder which is movably attachable at an opposite end to the towing hitch or intermediate component or vice versa.

15. A suspension system as claimed in claim 1, wherein the damping means comprises a shock absorption means comprising a mechanical shock absorber (51).

16. A suspension system as claimed in claim 1, wherein the towing hitch is mounted on at least one actuating arm of the damping means.

17. A suspension system as claimed in claim 1, wherein the towing hitch has a locking means (88) for securing a towed apparatus in place, the locking means and/or towing hitch being movable relative to one another such that they can be moved apart to accept at least a portion of the towed apparatus therebetween, and moved towards one another in order to contain the at least portion of the towed apparatus therebetween.

## Patentansprüche

1. Aufhängungssystem (1, 61, 101), umfassend eine Anhängerkupplung (33, 62, 102) für ein Fahrzeug (31) zum Reduzieren des Aufpralls von Kräften, die während eines Betriebs von einer gezogenen Vorrichtung auf ein Zugfahrzeug übertragen werden, wobei das Aufhängungssystem beweglich an dem Zugfahrzeug montiert werden kann, wobei das Aufhängungssystem ferner mindestens eine Dämpfungseinrichtung (13, 63, 64) umfasst, die an einem ersten Ende mit dem Zugfahrzeug verbunden werden kann und an einem zweiten Ende mit der Anhängerkupplung verbunden ist, um eine relative Bewegung zwischen einem Kupplungsende der Anhängerkupplung und dem Zugfahrzeug zu dämpfen, wobei die Dämpfungseinrichtung einen Fluidkreislauf (5) umfasst, **dadurch gekennzeichnet, dass** das Aufhängungssystem ein Steuersystem (8) umfasst, das mit dem Fluidkreislauf der Dämpfungseinrichtung in funktionsfähigem Eingriff ist, um die Dämpfungseinrichtung einstellbar zu steuern, und wobei das Steuersystem eine Einrichtung (6) zum Erfassen eines Auslösewerts zum Aktivieren der einstellbaren Steuerung der Dämpfungseinrichtung umfasst.

2. Aufhängungssystem gemäß Anspruch 1, wobei das Steuersystem eine Lastkompensationsseinrichtung zur Kompensation kleinerer Lasten und eine Lastkompensationsseinrichtung zur Kompensation größerer Lasten aufweist.

3. Aufhängungssystem gemäß Anspruch 1 oder 2, wobei die Erfassungseinrichtung einen Sensor (6) umfasst.

4. Aufhängungssystem gemäß Anspruch 3, wobei das Steuersystem eine elektronische Steuereinheit umfasst, die in funktionsfähigem Eingriff mit dem Sensor und in funktionsfähigem Eingriff mit einer Einrichtung (9) zum Zuführen von Fluid zu dem Fluidkreislauf ist.

5. Aufhängungssystem gemäß Anspruch 4, wobei die Einrichtung zum Zuführen von Fluid eine Pumpe ist, die in Fluidverbindung mit einem Speicherbehälter (10) des Kreislaufs ist.

6. Aufhängungssystem gemäß einem der Ansprüche 1 bis 5, wobei ein Steuerventilblock (41) in funktionsfähigem Eingriff mit dem Fluidkreislauf ist.

7. Aufhängungssystem gemäß einem der Ansprüche 2 bis 6, wobei die Lastkompensationsseinrichtung zur Kompensation kleinerer Lasten eine Anordnung aus Kolben (14) und Zylinder (13) und/oder einen Akkumulator (15), der in funktionsfähigem Eingriff mit dem Fluidkreislauf ist, umfasst.

8. Aufhängungssystem gemäß einem der vorherigen Ansprüche, wobei das Aufhängungssystem beweglich an dem Zugfahrzeug montiert werden kann, um eine allgemein vertikale und/oder horizontale Bewegung des Kupplungsendes der Zugkupplung zu ermöglichen.

9. Aufhängungssystem gemäß einem der vorherigen Ansprüche, wobei das Aufhängungssystem schwenkbar an dem Zugfahrzeug montiert ist.

10. Aufhängungssystem gemäß einem der Ansprüche 4 bis 9 in Abhängigkeit von Anspruch 4, wobei die elektronische Steuereinheit (8) in funktionsfähigem Eingriff mit einer Systemzustandsanzeige-Einrichtung (16) ist.

11. Aufhängungssystem gemäß Anspruch 10, wobei die Systemzustandsanzeige-Einrichtung eine visuelle Anzeigeeinheit ist, die in einfacher Sichtweite eines Fahrers des Zugfahrzeugs angeordnet sein kann.

12. Aufhängungssystem gemäß einem der vorherigen Ansprüche, wobei die Dämpfungseinrichtungen konstruiert sind, um generell vertikale und/oder horizontale Kräfte zu absorbieren.

13. Aufhängungssystem gemäß einem der vorherigen Ansprüche, wobei die Dämpfungseinrichtung einen oder mehrere hydraulische Dämpfungszylinder umfasst.

14. Aufhängungssystem gemäß Anspruch 13, wobei jeder von dem einen oder den mehreren hydraulischen Dämpfungszylindern einen Kolben umfasst, der an einem ersten Ende beweglich an dem Zugfahrzeug oder einer Zwischenkomponente davon angebracht werden kann, und der an einem gegenüberliegenden Ende beweglich an der Anhängerkupplung oder Zwischenkomponente oder umgekehrt angebracht werden kann.

15. Aufhängungssystem gemäß Anspruch 1, wobei die Dämpfungseinrichtung eine Stoßdämpfungseinrichtung umfassend einen mechanischen Stoßdämpfer (51) umfasst.

16. Aufhängungssystem gemäß Anspruch 1, wobei die Anhängerkupplung an mindestens einem Betätigungsarm der Dämpfungseinrichtung montiert ist.

17. Aufhängungssystem gemäß Anspruch 1, wobei die Anhängerkupplung eine Verriegelungseinrichtung (88) zum Befestigen einer gezogenen Vorrichtung an ihrer Stelle aufweist, wobei die Verriegelungseinrichtung und/oder die Anhängerkupplung in Bezug aufeinander beweglich sind, sodass sie auseinander bewegt werden können, um zumindest einen Abschnitt der gezogenen Vorrichtung dazwischen aufzunehmen, und aufeinander zu bewegt werden können, um den zumindest einen Abschnitt der gezogenen Vorrichtung dazwischen zu halten.

## Revendications

1. Un système de suspension (1, 61, 101) comprenant un attelage de remorquage (33, 62, 102) pour un véhicule (31) pour réduire l'impact des forces transférées d'un appareil remorqué à un véhicule de remorquage pendant le fonctionnement, le système de suspension pouvant être monté de manière mobile sur le véhicule de remorquage, le système de suspension comprenant en outre au moins un moyen d'amortissement (13, 63, 64) pouvant être connecté à une première extrémité au véhicule de remorquage et connecté à une deuxième extrémité à l'attelage de remorquage de manière à amortir le mouvement relatif entre une extrémité d'attelage de l'attelage de remorquage et le véhicule de remorquage dans lequel le moyen d'amortissement comprend un circuit de fluide (5), **caractérisé en ce que** le système de suspension comprend un système de commande (8) en engagement fonctionnel avec le circuit de fluide du moyen d'amortissement pour une commande réglable du moyen d'amortissement et dans lequel le système de commande comprend un moyen (6) pour détecter une valeur de déclenchement pour activer la commande réglable du moyen d'amortissement.

2. Un système de suspension selon la revendication 1, dans lequel le système de commande a un moyen de compensation de charge pour la compensation de charges mineures et un moyen de compensation de charge pour la compensation de charges majeures.

3. Un système de suspension selon la revendication 1 ou 2, dans lequel le moyen de détection comprend un capteur (6).

4. Un système de suspension selon la revendication 3, dans lequel le système de commande comprend une unité de commande électronique en engagement fonctionnel avec le capteur et en engagement fonctionnel avec un moyen (9) pour fournir du fluide au circuit de fluide.

5. Un système de suspension selon la revendication 4, dans lequel le moyen pour fournir du fluide est une pompe en communication fluidique avec un réservoir (10) du circuit.

6. Un système de suspension selon l'une quelconque des revendications 1 à 5, dans lequel un bloc de soupape de commande (41) est engagé de manière opérationnelle avec le circuit de fluide.

7. Un système de suspension selon l'une quelconque des revendications 2 à 6, dans lequel le moyen de compensation de charge pour la compensation de charges mineures comprend un arrangement de piston (14) et de cylindre (13) et / ou un accumulateur (15) couplé de manière opérationnelle au circuit de fluide,

8. Un système de suspension selon l'une quelconque des revendications précédentes, dans lequel le système de suspension peut être monté de manière mobile sur le véhicule de remorquage pour permettre un mouvement généralement vertical et / ou horizontal de l'extrémité d'attelage de l'attelage de remorquage.

9. Un système de suspension selon l'une quelconque des revendications précédentes, dans lequel le système de suspension peut être monté de manière pivotante sur le véhicule de remorquage.

10. Un système de suspension selon l'une quelconque des revendications 4 à 9 lorsqu'il dépend de la revendication 4, dans lequel l'unité de commande électronique (8) est en engagement opérationnel avec un moyen d'affichage de l'état du système (16).

11. Un système de suspension selon la revendication 10, dans lequel le moyen d'affichage de l'état du système est une unité d'affichage visuelle pouvant être placée à une distance de vision facile d'un conducteur du véhicule de remorquage.

12. Un système de suspension selon l'une quelconque des revendications précédentes, dans lequel les moyens d'amortissement sont conçus pour absorber des forces généralement verticales et / ou horizontales.

13. Un système de suspension selon l'une quelconque des revendications précédentes, dans lequel le moyen d'amortissement comprend un ou plusieurs cylindres d'amortissement hydrauliques.

14. Un système de suspension selon la revendication 13, dans lequel chacun des un ou plusieurs cylindres d'amortissement hydrauliques comprend un piston qui peut être fixé de façon mobile à une première extrémité au véhicule de remorquage ou à un composant intermédiaire de celui-ci et un cylindre qui peut être fixé de façon mobile à une extrémité opposée à l'attelage de remorquage ou au composant intermédiaire ou vice versa.

15. Un système de suspension selon la revendication 1, dans lequel le moyen d'amortissement comprend un moyen d'absorption des chocs comprenant un amortisseur mécanique (51).

16. Un système de suspension selon la revendication 1, dans lequel l'attelage de remorquage est monté sur au moins un bras d'actionnement du moyen d'amortissement.

17. Un système de suspension selon la revendication 1, dans lequel l'attelage de remorquage a un moyen de verrouillage (88) pour fixer un appareil remorqué en place, le moyen de verrouillage et / ou l'attelage de remorquage étant mobiles l'un par rapport à l'autre de telle sorte qu'ils peuvent être écartés pour accepter au moins une partie de l'appareil remorqué entre eux, et déplacés l'un vers l'autre afin de contenir l'au moins une partie de l'appareil remorqué entre eux.
